# EUROPÄISCHE PATENTANMELDUNG

(11) **EP 1 048 503 A2**
(43) Veröffentlichungstag der Anmeldung: **02.11.2000**
(21) Anmeldenummer: 00109204.8
(22) Anmeldetag: 28.04.2000
(51) Int. Cl.: B60J 5/08

(54) **Nutzfahrzeug mit einer Automatiktür**

(30) Priorität: 30.04.1999 DE 19919736
(71) Anmelder: Paul, Josef, D-94474 Vilshofen (DE)
(72) Erfinder: Paul, Josef, D-94474 Vilshofen (DE)
(74) Vertreter: Matschkur, Peter

(57) **Zusammenfassung**

Nutzfahrzeug, insbesondere für die Entsorgungstechnik, mit einer als Automatiktür ausgebildeten Fahrer- und/oder Beifahrertür, wobei die Automatiktür als nach oben aufziehbares Lamellenrolltor (4) mit Sichtfenstern ausgebildet ist, das über einen motorischen Antrieb betätigbar ist, der zum Hochziehen und Herunterlassen unterschiedliche Geschwindigkeiten aufweist.

## Beschreibung

Die Erfindung bezieht sich auf ein Nutzfahrzeug, insbesondere für die Entsorgungstechnik, mit einer als Automatiktür ausgebildeten Fahrer- und/oder Beifahrertür.

Aus dem deutschen Gebrauchsmuster 295 15 418.7 ist bereits ein Sammelfahrzeug bekannt geworden, bei dem die Beifahrertür als Falttür ausgebildet ist, so dass sie beim Öffnen nicht so stark in den Straßenraum ragt und damit das Fahrzeug entweder näher an Wände und Bäume herangefahren werden kann, ohne dass die Türöffnung behindert wird oder aber die geöffnete Tür nicht wie bei den üblichen Schwenktüren weit in den Straßenraum ragt und damit den Verkehr behindert.

Dieses Problem stellt sich heutzutage in gesondertem Maß auch für die Türen auf der Fahrerseite, da bei modernen Sammelfahrzeugen mit Kopflader, Seitenlader usw. häufig nur der Fahrer alleine unterwegs ist und zum Betätigen des Kopfladers aussteigen muss, um die Entleerung der Sammelbehälter am Straßenrand von außen zu steuern. Das häufige Ein- und Aussteigen wird durch die häufig um 60° aufschwenkende normale Fahrertür zum einen stark behindert und zum anderen hindert diese weit nach außen ragende Tür ein nahes Heranfahren an Mauern bzw. ein unbehindertes Vorbeifahren der übrigen Verkehrsteilnehmer.

Durch Vorsehen einer Falttür entsprechend dem vorstehend angesprochenen Gebrauchsmuster lassen sich die Verhältnisse zwar gegenüber einer Schwenktür etwas verbessern, doch ergibt sich hierbei wieder der Nachteil, dass die schwenkbar aneinander angelenkten Abschnitte der Falttür entweder nach dem Zusammenfalten in der Türöffnung liegen, so dass dann die Türöffnung in der Breite beengt ist, oder aber dass sie nach außen angefaltet werden, was aber ebenfalls noch einen relativ großen Überstand beim Öffnen und Schließen bedingt.

In der GB 12 75 551 ist zwar bereits ein Lamellenrolltor für eine Fahrzeugtür vorgeschlagen worden, die von Hand hochgezogen und wieder geschlossen werden kann. Eine solche Tür ist aber für ein Nutzfahrzeug mit ständig in kurzen Abständen notwendigen Türöffnen und Türschließen nicht geeignet.

Der Erfindung liegt daher die Aufgabe zugrunde, ein Nutzfahrzeug der eingangs genannten Art so auszugestalten, dass bei großer Breite der Türöffnung bei geöffneter Automatiktür das Heranfahren des Fahrzeugs an seitliche Begrenzungen durch die Tür weder beim Öffnen und Schließen der Tür beeinträchtigt.

Zur Lösung dieser Aufgabe ist erfindungsgemäß vorgesehen, dass die Automatiktür als nach oben aufziehbares Lamellenrolltor mit Sichtfenstern ausgebildet ist, das über einen motorischen Antrieb betätigbar ist, der zum Hochziehen und Herunterlassen unterschiedliche Geschwindigkeiten aufweist.

Durch das Ausbilden der Automatiktür als Lamellenrolltor oder Sektionaltor, das nach oben weggezogen wird, ergibt sich nach außen überhaupt kein Überstand - wie dies auch bei Falttoren natürlich noch der Fall sein muss, bei denen bei einer einfachen Faltung die Tür ja immer noch mindestens halb so weit nach außen ragt wie die normale einteilige Schwenktür. Die Tür ist nach dem Hochziehen weder als Ausstiegshindernis in der Türöffnung, noch als störender Überstand außen in übereinander gefalteter und damit auftragender Stellung am Fahrerhaus angeordnet. Dies ermöglicht sowohl ein bequemes Aussteigen, als auch insbesondere eine sehr rasche Türbetätigung. Ein Lamellenrolltor lässt sich durch Vorsehen eines geeigneten Öffnungsmotors sehr viel rascher öffnen als die meist nur als relativ komplizierte Hydraulikantriebe realsierbaren Antriebe für automatische Falttüren.

Dabei ist es wichtig, dass ein umschaltbarer oder unterschiedlicher Antrieb mit unterschiedlichen Geschwindigkeiten für das Öffnen und Schließen des Lamellenrolltors vorgesehen ist, wobei die Öffnungsgeschwindigkeit mindesten etwa 1 m/sec betragen sollte, während die Schließgeschwindigkeit mit 0,5 m/sec völlig ausreicht. Wenn der Fahrer anhält und den Schalter zum Öffnen der Tür betätigt, ist sie innerhalb maximal drei Sekunden oder weniger geöffnet, so dass er praktisch mit dem Anhalten und der Betätigung des Schalters sofort aussteigen kann. Wenn er wieder eingestiegen ist und weiterfahren möchte, genügt es natürlich, wenn sich das Lamellenrolltor innerhalb einiger Sekunden wieder schließt.

Besonders einfach gestaltet sich ein erfindungsgemäßes Lamellenrolltor als Fahrer- oder Beifahrertür, wenn zumindest einige, vorzugsweise alle Lamellen aus einem durchsichtigen Werkstoff, vorzugsweise Kunststoff oder Glas, bestehen. Durch die insgesamt durchsichtige Ausbildung hat der Fahrer einen hervorragenden Überblick unmittelbar auf den Boden seitlich in der Nähe des Fahrzeugs, so dass er ohne die Gefahr eines Hängenbleibens sehr nahe an seitliche Hindernisse heranfahren kann.

Das seitlich in Führungsschienen eingreifende Lamellenrolltor kann wahlweise auf eine Rolle über der Türöffnung aufrollbar sein, oder aber auch in einen Stauraum unter oder über dem Dach des Fahrerhauses verschiebbar sein. Diese letztere Ausbildung braucht keinen Platz für eine im aufgewickelten Zustand relativ dicke Rolle, sondern es genügen einige Zentimeter für die Führungsschienen unter oder über dem Dach, wobei bei einer Anordnung des Stauraums über dem Dach des Fahrerhauses zweckmäßigerweise noch eine Schutzabdeckung vorgesehen ist, schon um ein sich Fangen des Fahrtwindes im unverkleideten Lamellenrolltor zu vermeiden, wenn dies bei relativ geringen Geschwindigkeiten gar nicht erst jedes Mal aufgezogen und heruntergelassen wird.

Neben der Ausbildung des Lamellenrolltors aus einer Vielzahl von schmalen Lamellen kann es - was insbesondere die bevorzugte Ausbildung von Glasfenstern einfacher macht - auch aus wenigen großflächigen Sektionen (Lamellen) bestehen, wobei es sich als besonders zweckmäßig erwiesen hat, dass die bewegliche Verbindung der einzelnen Sektionen oder Lamellen baulich in die jeweilige Sektion oder Lamelle integriert ist, so dass kein zusätzlicher Raumbedarf in Richtung Fahrer oder nach außen gegeben ist. Neben dem geringeren Raumbedarf hat das Wegfallen überstehender Scharniere auch den Vorteil, dass davon keine Verletzungsgefahren ausgehen können.

Das Anformen von Scharnierrollen an den Ober- und Unterkanten der Lamellen - vorzugsweise bestehen diese aus einem schmalen Kunststoff- oder Metallrahmen, in den ein Kunststoff- oder Glasfenster eingesetzt ist - ermöglicht eine einfache Verbindung durch Einschieben eines die Scharnierrollen beider aneinander stoßender Lamellen durchsetzenden Scharnierdorns. Dieser wiederum lässt sich gemäß einem weiteren Merkmal der vorliegenden Erfindung als Träger für Führungselemente, wie beispielsweise Rollen od. dgl., verwenden, mit denen das Lamellenrolltor in seitlichen Führungsschienen des Türrahmens leicht gängig geführt sein kann.

Mit besonderem Vorteil kann weiter vorgesehen sein, dass der Antrieb mit dem Tacho des Fahrzeugs gekoppelt ist, um bei einer vorgegebenen Geschwindigkeit des Fahrzeugs das Lamellenrolltor ohne Zutun des Fahrers zu schließen.

Schließlich liegt es auch noch im Rahmen der Erfindung, bei einer Ausgestaltung, bei der das Lamellenrolltor in einen Stauraum unter dem Dach des Fahrerhauses verschiebbar ist, die innere Verkleidung des Fahrerhauses als unter dem eingezogenen Lamellenrolltor angeordnete Wanne auszubilden, die mit einer Wasserabführung nach außen versehen ist. Auf diese Art und Weise wird verhindert, dass bei Regen die Feuchtigkeit von dem beim Öffnen der Tür eingezogenen Lamellenrolltor auf die Sitze und den Fahrer heruntertropfen kann.

Die Erfindung soll nachstehend anhand eines Ausführungsbeispiel näher erläutert werden. Dabei zeigen:
- Fig. 1: eine Seitenansicht des Fahrerhauses eines Sammelfahrzeugs für Wertstoffe oder Müll mit einer erfindungsgemäß als Lamellenrolltor ausgebildeten Fahrertür,
- Fig. 2: eine teilweise aufgebrochene Stirnansicht des Fahrerhauses nach Fig. 1,
- Fig. 3 und 4: den Fig. 1 und 2 entsprechende Ansichten mit einer abgewandelten Ausführungsform der Fahrertür, und
- Fig. 5: eine vergrößerte Ansicht einer Lamelle (Sektion) der Fahrertür in den Fig. 3 und 4.

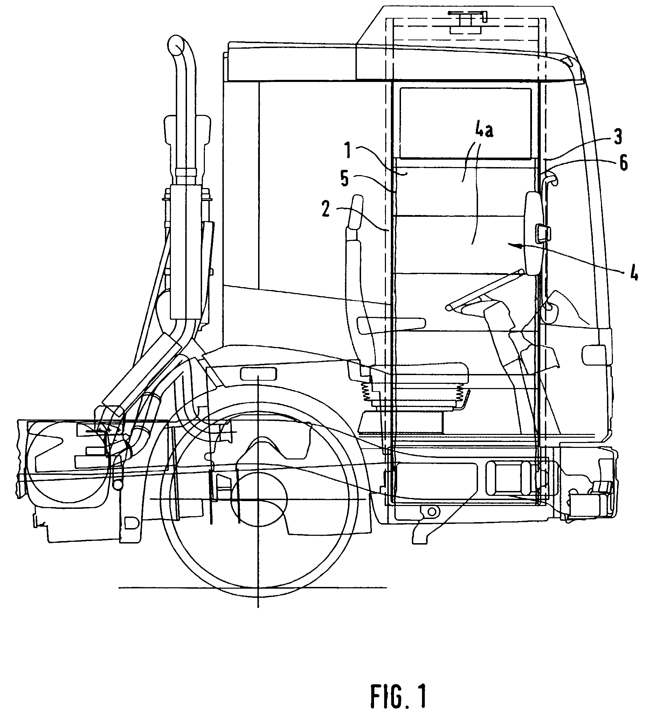

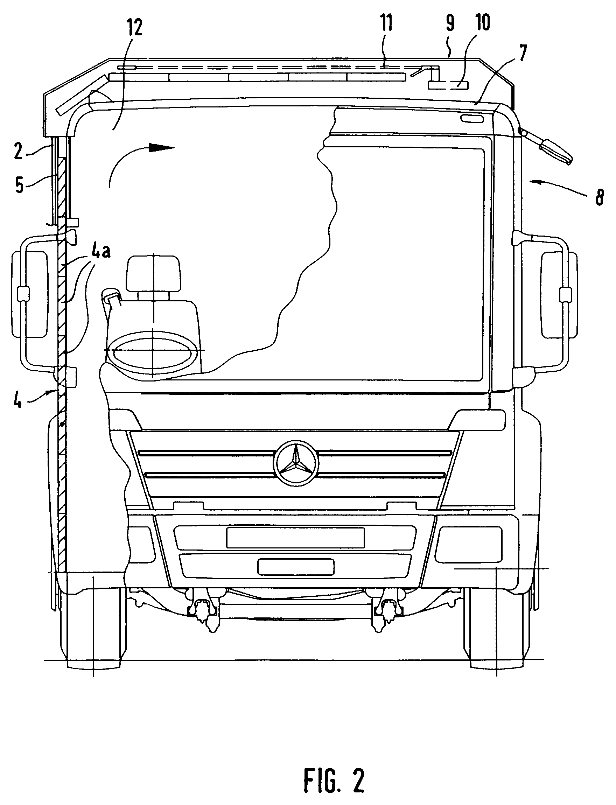

Das dargestellte Ausführungsbeispiel zeigt ein Nutzfahrzeug, bei dem lediglich die Fahrertür als automatisches Lamellenrolltor ausgebildet ist. Es könnte jedoch auch die Beifahrertür oder die Fahrer- und die Beifahrertür als Lamellenrolltor ausgebildet sein. Im Ausführungsbeispiel nach den Fig. 1 und 2 sind anstelle der üblichen Schwenktür in der Türöffnung 1 links und rechts zwei Führungsschienen 2 und 3 vorgesehen, in welche die Ränder eines Lamellenrolltors 4 eingreifen. Dabei dienen nur schematisch angedeutete Abdichtungen 5 und 6 sowohl der Abdichtung des Spalts als auch der Verhinderung eines Klapperns des Lamellenrolltors im geschlossenen Zustand. Das Lamellenrolltor 4 kann über einen im dargestellten Ausführungsbeispiel über dem Dach 7 des Fahrerhauses 8 unterhalb einer Abdeckung 9 angeordneten Antriebsmotor 10 hochgezogen und abgelassen werden, der über ein Verbindungselement, z. B. eine Zugkette 11, am oberen freien Ende des Lamellenrolltors angreift. Dabei kann der Antriebsmotor so ausgebildet sein, dass er zum Hochziehen und Herunterlassen unterschiedliche Geschwindigkeiten aufweist, um - wie bereits eingangs angesprochen - ein rasches Öffnen im Verhältnis zu einem relativ langsameren Schließen der Tür zu erreichen. Die einzelnen Lamellen 4a des Lamellenrolltors 4, die in an sich bekannter Weise und deshalb in Fig. 2 nicht im Einzelnen dargestellt, gelenkig aneinander hängen, sind entweder alle oder zumindest im vom Fahrer aus seitlich sichtbaren Bereich des geschlossenen Lamellenrolltor aus durchsichtigem Werkstoff, beispielsweise Kunststoff oder Glas, ausgebildet.

Die Erfindung ist nicht auf das dargestellte Ausführungsbeispiel beschränkt. Neben der Möglichkeit, dass das die Automatiktür auf der Fahrerseite bildende Lamellenrolltor 4 auch auf eine Aufwickelrolle im Eckbereich 12 über dem Fahrsitz aufzurollen, könnte selbstverständlich auch ein Aufziehen des Lamellenrolltors unter das Dach 7 des Fahrerhauses erfolgen. In diesem Fall sind die Führungsschienen dann unter dem Dach 7 des Fahrerhauses angeordnet und nicht darüber liegend wie im gezeigten Ausführungsbeispiel. Diese wahlweise Anordnung der Führungsschienen zum Hochziehen des Lamellenrolltors einmal oberhalb und einmal unterhalb des Dachs 7 der Fahrerkabine gibt auch die Möglichkeit, beide Türen des Fahrerhauses als Lamellenrolltore auszubilden. Das eine wird dann über das Dach und das andere unter das Dach eingezogen, wenn sie nicht, wie bereits angesprochen, auf Rollen in den oberen Ecken des Fahrerhauses aufgewickelt werden können.

Es versteht sich von selbst, dass natürlich die in Fig. 1 angedeuteten Führungsschienen 2 und 3 für das Lamellenrolltor 4 auch nicht nur in der Türöffnung angeordnet sind, sondern über oder unter dem Dach 7. In Fig. 2 ist dies aber nur teilweise angedeutet und im Dachbereich der besseren Übersichtlichkeit halber völlig weggelassen worden.

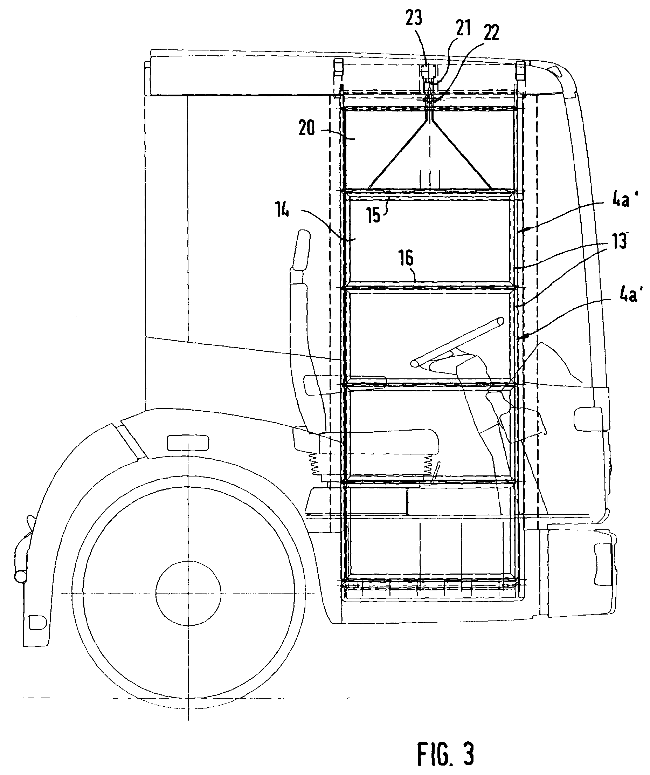

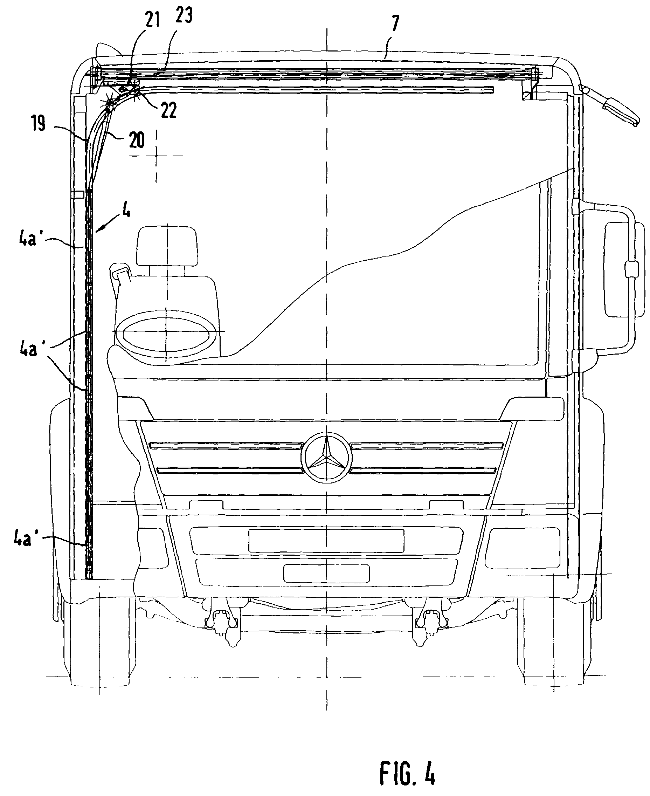

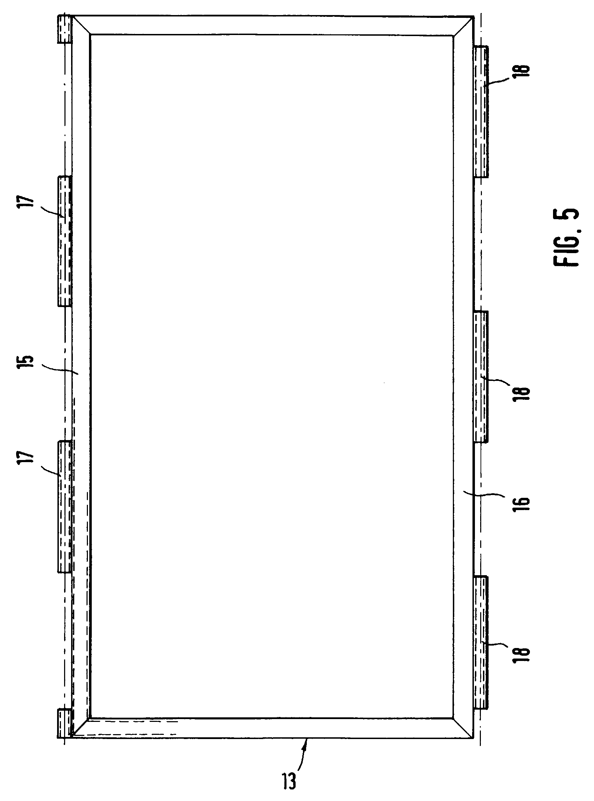

Das Lamellenrolltor 4 beim Ausführungsbeispiel nach den Fig. 3 und 4 besteht lediglich aus vier großflächigen Sektionen oder Lamellen 4a, die ihrerseits wiederum aus einem schmalen, umlaufenden, vorzugsweise metallischen, Rechteckrahmen 13 bestehen, in den eine großflächige Kunststoff- oder Glasplatte 14 ein bzw. aufgesetzt ist. Am waagrechten oberen und unteren Schenkel 15 bzw. 16 jedes Rahmens 13 (vgl. insbesondere Fig. 5) sind auf Lücke versetzte Scharnierrollen 17 und 18 angeformt, die vollständig innerhalb der Dicke des Rahmens liegen und somit weder nach innen noch nach außen über die Ebene des Tors überstehen. Diese Scharnierrollen 17 und 18 zweier aneinander stoßender Lamellen 4a' bilden optisch eine durchgehende Rolle, in die ein Scharnierdorn zur Verbindung eingesteckt wird, der wiederum mit seinen überstehenden Enden als Träger für Laufrollen dienen kann, mit denen das Lamellenrolltor 4 in seitliche Führungsschienen 19 eingreift, um auf diese Art und Weise eine besonders leichtgängige Verschiebung zu ermöglichen. An die oberste Lamelle 4a' schließt sich eine undurchsichtige, beispielsweise aus Blech ausgebildete, ähnlich geformte Sektion 20 an, die eine Verbindung zum Antrieb darstellt. Dieser besteht im dargestellten Ausführungsbeispiel aus einem Linearantrieb 23 der über dem eingezogenen Lamellenrolltor 4 unter dem Dach 7 des Fahrerhauses quer angeordnet ist. Das bewegliche Teil 21 dieses Motors ist bei 22 gelenkig mit der Sektion 20 verbunden. Beim Querverfahren des Teils 21 längs des Linearantriebs 23 wird das Rolltor entweder geöffnet oder geschlossen. In den Fig. 3 und 4 nicht dargestellt ist die unter dem eingezogenen Lamellenrolltor 4 angeordnete, als Wanne ausgebildete, Innenverkleidung des Fahrerhauses mit einer Wasserabführung nach außen, um ein Heruntertropfen von Wasser von einer eingezogenen nassen Tür ins Innere des Fahrerhauses zu verhindern.

Durch die erfindungsgemäße Ausbildung speziell der Fahrertür kann der Fahrer ungehindert aussteigen, da keine Behinderung durch eine meist nur 60° öffnende Schwenktür gegeben ist. Es bedarf keiner körperlichen Anstrengung durch häufiges Öffnen und Schließen der üblichen Schwenktür (Ergonomie-Vorteil) und schließlich hat man bei der erfindungsgemäßen Ausbildung einer Fahrer- oder Beifahrertür als Lamellenrolltor keinen Platzverlust für Freigang der Tür an Engstellen (kleine Gassen, Fußgängerzonen).

Darüber hinaus hat die erfindungsgemäße Ausbildung auch den Vorteil, dass sich ohne großen Aufwand auch nachträglich Nutzfahrzeuge noch von einer bisher vorhandenen Schwenktür auf eine erfindungsgemäße Automatiktür mit Lamellenrolltor umrüsten lassen.

## Patentansprüche

1. Nutzfahrzeug, insbesondere für die Entsorgungstechnik, mit einer als Automatiktür ausgebildeten Fahrer- und/oder Beifahrertür, dadurch gekennzeichnet, dass die Automatiktür als nach oben aufziehbares Lamellenrolltor (4) mit Sichtfenstern ausgebildet ist, das über einen motorischen Antrieb (10) betätigbar ist, der zum Hochziehen und Herunterlassen unterschiedliche Geschwindigkeiten aufweist.

2. Nutzfahrzeug nach Anspruch 1, dadurch gekennzeichnet, dass zumindest einige der Lamellen (4a) aus einem durchsichtigen Werkstoff, vorzugsweise Kunststoff oder Glas, bestehen.

3. Nutzfahrzeug nach Anspruch 1 oder 2, dadurch gekennzeichnet, dass das seitlich in Führungsschienen (2, 3) eingreifende Lamellenrolltor (4) in einen Stauraum unter oder über dem Dach (7) des Fahrerhauses (8) verschiebbar ist.

4. Nutzfahrzeug nach einem der Ansprüche 1 bis 3, dadurch gekennzeichnet, dass getrennte Antriebe zum Öffnen und Schließen des Lamellenrolltors (4) vorgesehen sind.

5. Nutzfahrzeug nach einem der Ansprüche 1 bis 4, dadurch gekennzeichnet, dass das Lamellenrolltor (4) aus wenigen großflächigen Sektionen (Lamellen) (4a') besteht.

6. Nutzfahrzeug nach einem der Ansprüche 1 bis 5, dadurch gekennzeichnet, dass die bewegliche Verbindung der einzelnen Lamellen (4a') baulich in die jeweilige Lamelle integriert ist.

7. Nutzfahrzeug nach einem der Ansprüche 1 bis 6, dadurch gekennzeichnet, dass ein Teil der beweglichen Verbindung zwischen den Lamellen (4a') als Aufnahme der Führungselemente dient.

8. Nutzfahrzeug nach einem der Ansprüche 1 bis 7, dadurch gekennzeichnet, dass der Antrieb (10, 23) mit dem Tacho gekoppelt ist, um bei einer vorgegebenen Geschwindigkeit das Lamellenrolltor (4) ohne Zutun des Fahres zu schließen.

9. Nutzfahrzeug nach einem der Ansprüche 3 bis 8, dadurch gekennzeichnet, dass die innere Verkleidung des Fahrerhauses als Wanne ausgebildet ist, die mit einer Wasserabführung nach außen versehen ist.
